# EUROPEAN PATENT APPLICATION

(11) **EP 2 990 907 A2**
(43) Date of publication of application: **02.03.2016**
(21) Application number: 15182957.9
(22) Date of filing: 28.08.2015
(51) Int. Cl.: G06F 1/20, G06F 1/32

(54) **DEVICE FOR CONTROLLING THE PERFORMANCE LEVEL OF THE DEVICE BASED ON FLUCTUATIONS IN INTERNAL TEMPERATURE AND METHOD THEREOF**

(30) Priority: 29.08.2014 KR 20140114588
(71) Applicant: Samsung Electronics Co., Ltd., Gyeonggi-do 16677 (KR)
(72) Inventor: BANG, Sung Yong, 16531 Gyeonggi-do (KR); KIM, Byung Wook, 16700 Gyeonggi-do (KR); LEE, Ju Beam, 16948 Gyeonggi-do (KR); KIM, Moo Young, 06321 Seoul (KR)
(74) Representative: Lubberdink, Pim

(57) **Abstract**

An electronic device, a method of controlling the performance level of the electronic device, and a chipset thereof is provided. The electronic device includes a sensor module configured to measure an internal temperature of the electronic device, a surface temperature predicting module to predict a surface temperature of the electronic device using the internal temperature measured by the sensor module, and a processor to control the performance level of the electronic device based on the predicted surface temperature. The method includes measuring an internal temperature of the electronic device; predicting a surface temperature of the electronic device using the measured internal temperature; and controlling the performance level of the electronic device based on the predicted surface temperature.

## Description

### BACKGROUND

### 1. Field of the Disclosure

The present disclosure relates generally to an electronic device, and more particularly, to a method of controlling the performance level of an electronic device based on fluctuations in internal temperature of the electronic device.

### 2. Description of the Related Art

With the advancement of digital technologies, there may be supplied an electronic device capable of establishing communication and processing personal information while in transit, such as a mobile communication terminal, a personal digital assistant (PDA), an electronic notetaker, a smart phone, a personal computer (PC), and the like. An electronic device may become mobile and encompass fields of other terminals as well as the typical inherent field of the electronic device

Typically, an electronic device may have a call function, such as voice call and video call, a message transmitting and receiving function, such as short message service (SMS), a multimedia message service (MMS), and an e-mail function, an electronic notetaking function, a camera function, a broadcast reproducing function, a video reproducing function, a music reproducing function, an internet function, a messenger function, a social networking service (SNS) function, and the like.

However, an electronic device may require a plurality of chipsets, corresponding to the above-described functions, within a dimension restricted according to the trend toward light, small electronic devices, thereby causing the radiation of heat from an electronic device.

### SUMMARY

An aspect of the present disclosure is to provide an electronic device and a method of controlling the performance level of an electronic device based on fluctuations in an internal temperature of the electronic device.

In accordance with an aspect of the present disclosure, an electronic device is provided. The electronic device includes a sensor module configured to measure an internal temperature of the electronic device, a surface temperature predicting module configured to predict a surface temperature of the electronic device using the internal temperature measured by the sensor module, and a processor configured to control a performance level of the electronic device based on the predicted surface temperature.

In accordance with another aspect of the present disclosure, a method of controlling the performance level of an electronic device is provided. The method includes measuring an internal temperature of the electronic device, predicting a surface temperature of the electronic device using the measured internal temperature, and controlling the performance level of the electronic device based on the predicted surface temperature.

In accordance with another aspect of the present disclosure, a chipset for controlling a performance level of an electronic device is provided. The chipset is configured to measure an internal temperature of the electronic device; predict a surface temperature of the electronic device using the measured internal temperature; and control a performance level of the electronic device based on the predicted surface temperature.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device in a network environment, according to an embodiment of the present disclosure;
FIG. 2 is a block diagram of an electronic device, according to an embodiment of the present disclosure;
FIG. 3 is a block diagram of a program module, according to an embodiment of the present disclosure;
FIG. 4 is a block diagram of an electronic device for limiting performance based on fluctuations in an internal temperature, according to an embodiment of the present disclosure;
FIG. 5A is a graph illustrating a size of a buffer used to predict a surface temperature, according to an embodiment of the present disclosure;
FIG. 5B is a graph illustrating a change in size of a buffer used to predict a surface temperature, according to an embodiment of the present disclosure;
FIG. 6 is a flowchart of a method in which an electronic device predicts a surface temperature, according to an embodiment of the present disclosure; and
FIG. 7 is a flowchart of a method in which an electronic device controls its performance using its surface temperature, according to an embodiment of the present disclosure.

### DETAILED DESCRIPTION OF EMBODIMENTS OF THE PRESENT DISCLOSURE

Embodiments of the present disclosure are described with reference to the accompanying drawings. Accordingly, those of ordinary skill in the art will recognize that modifications, equivalents, and/or alternatives of the embodiments described herein can be variously made without departing from the scope of the present disclosure. In the accompanying drawings, similar components may be marked by similar reference numerals, where like reference numbers are used to depict the same or similar elements, features, and structures.

In the present disclosure, the expressions "have," "may have," "include," "comprise," "may include," and "may comprise" used herein indicate the existence of corresponding features (e.g., elements such as numeric values, functions, operations, or components) but do not exclude the presence of additional features.

In the present disclosure, the expressions "A or B," "at least one of A and/or B," and "one or more of A and/or B," and the like used herein may include any and all combinations of one or more of the associated listed items. For example, the expressions "A or B," "at least one of A and B," or "at least one of A or B" may refer to all of (1) where at least one A is included, (2) where at least one B is included, or (3) where both at least one A and at least one B are included.

The terms, such as "first," "second," and the like used herein may refer to various elements of various embodiments of the present disclosure, but do not limit the present disclosure. For example, such terms do not limit the order and/or the priority of the elements. Furthermore, such terms may be used to distinguish one element from another element. For example, "a first user device" and "a second user device" indicate different user devices. For example, without departing the scope and spirit of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there is no intervening element (e.g., a third element).

According to the situation, the expression "configured to" used herein may be used as, for example, the expressions "suitable for," "having the capacity to," "designed to," "adapted to," "made to," or "capable of." The term "configured to" does not indicate only "specifically designed to" in hardware. Instead, the expression "a device configured to" may indicate that the device is "capable of" operating together with another device or other components. For example, a "processor configured to perform A, B, and C" may indicate a dedicated processor (e.g., an embedded processor) for performing a corresponding operation or a general-purpose processor (e.g., a central processing unit (CPU) or an application processor) which may perform corresponding operations by executing one or more software programs which are stored in a memory device.

Terms used in the present disclosure are used to describe certain embodiments of the present disclosure but are not intended to limit the scope of the present disclosure. The terms of a singular form may include plural forms unless otherwise specified. Unless otherwise defined herein, all of the terms used herein, may have the same meanings that are generally understood by a person skilled in the art. It will be further understood that terms, which are defined in a dictionary and commonly used, should also be interpreted as is customary in the relevant related art and not in an idealized or overly formal manner unless expressly so defined herein in an embodiment of the present disclosure. In some cases, even if terms are defined in the present application, they are not to be interpreted to exclude an embodiment of the present disclosure.

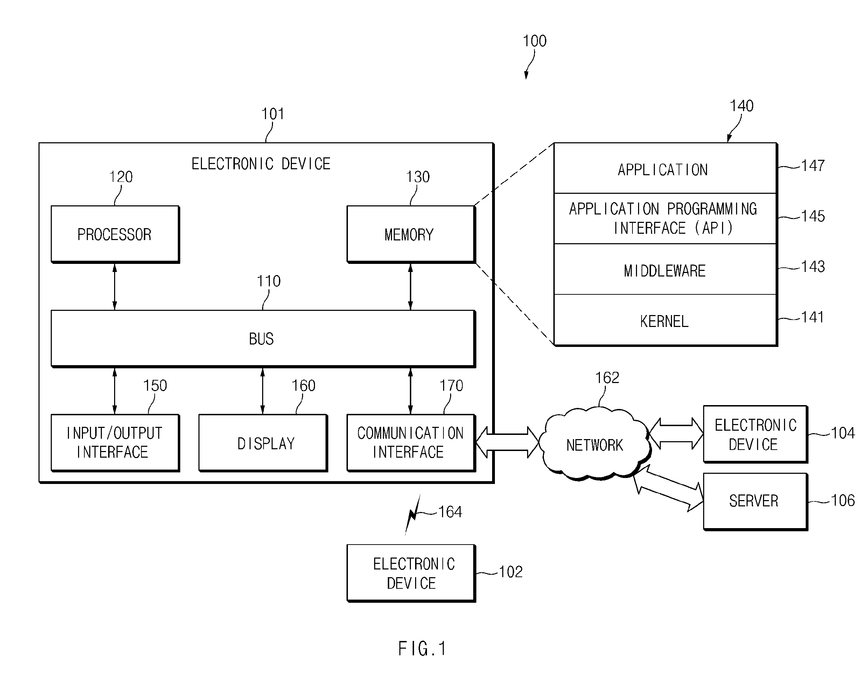

An electronic device according to an embodiment of the present disclosure may be an electronic device which controls a performance level thereof based on fluctuations in an internal temperature of the electronic device, which is described below with reference to FIGS. 1 to 7. For example, an electronic device may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), motion picture experts group (MPEG-1 or MPEG-2) audio layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to an embodiment of the present disclosure, an electronic device may be a smart home appliance capable of controlling the performance level thereof based on fluctuations in an internal temperature of the electronic device. A smart home appliance may include at least one of, for example, televisions (TVs), digital versatile disc (DVD) players, audio players, refrigerators, air conditioners, cleaners, ovens, microwave ovens, washing machines, air cleaners, set-top boxes, TV boxes (e.g., Samsung HomeSync™, Apple TV™, or Google TV™), game consoles (e.g., Xbox™ and PlayStation™), electronic dictionaries, electronic keys, camcorders, electronic picture frames, and the like.

According to an embodiment of the present disclosure, an electronic device may include at least one of the following devices for controlling its performance level based on fluctuations in an internal temperature: medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI) device, a computed tomography (CT) device, scanners, and ultrasonic devices) receiving a user input in an idle mode, navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller machines (ATMs), point of sale (POS) devices, or Internet of Things devices (e.g., light bulbs, various sensors, electric or gas meters, sprinkler devices, fire alarms, thermostats, street lamps, toasters, exercise equipment, hot water tanks, heaters, boilers, and the like).

According to an embodiment of the present disclosure, an electronic device may include at least one of the following devices capable of controlling its performance level based on fluctuations in an internal temperature of the electronic device: parts of furniture or buildings/structures, electronic boards, electronic signature receiving devices, projectors, or various measuring instruments (e.g., water meters, electricity meters, gas meters, or wave meters, and the like). An electronic device according to an embodiment of the present disclosure may be one or more combinations of the above-mentioned devices.

According to an embodiment of the present disclosure, an electronic device may be a flexible electronic device capable of controlling its performance level based on fluctuations in an internal temperature.

Also, an electronic device according to an embodiment of the present disclosure is not limited to the above-mentioned devices, and may include new electronic devices according to the development of technology.

Hereinafter, an electronic device according to an embodiment of the present disclosure is described with reference to the accompanying drawings. The term "user" used herein may refer to a person who uses an electronic device or may refer to a device (e.g., an artificial intelligence electronic device) that uses an electronic device.

FIG. 1 is a block diagram of an electronic device 101 in a network environment 100, according to an embodiment of the present disclosure.

Referring to FIG. 1, the electronic device 101 may include a bus 110, a processor 120, a memory 130, an input/output (I/O) interface 150, a display 160, and a communication interface 170. According to an embodiment of the present disclosure, the electronic device 101 may not include at least one of the above-described components or may further include other component(s).

The bus 110 may interconnect the above-described components 110 to 170 and may be a circuit for relaying communications (e.g., a control message and/or data) among the above-described components.

The processor 120 may include one or more of a central processing unit (CPU), an application processor (AP), or a communication processor (CP). The processor 120 may perform, for example, data processing or an operation associated with control or communication of at least one other component(s) of the electronic device 101.

The memory 130 may include a volatile and/or nonvolatile memory. The memory 130 may store instructions or data associated with at least one other component(s) of the electronic device 101. According to an embodiment of the present disclosure, the memory 130 may store software and/or a program 140. The memory 130 may include, for example, a kernel 141, a middleware 143, an application programming interface (API) 145, and/or an application program (or an application) 147. At least a portion of the kernel 141, the middleware 143, or the API 145 may be referred to as an "operating system (OS)."

The kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform a mediation role such that the API 145 or the application program 147 communicates with the kernel 141 to exchange data. Furthermore, with regard to task requests received from the application program 147, for example, the middleware 143 may perform a control (e.g., scheduling or load balancing) on a task request using a method of assigning priority, which makes it possible to use a system resource (e.g., the bus 110, the processor 120, the memory 130, or the like) of the electronic device 101, to at least one application.

The API 145 may be an interface through which the application program 147 controls a function provided by the kernel 141 or the middleware 143, and may include, for example, at least one interface or function (e.g., an instruction) for a file control, a window control, image processing, a character control, or the like.

The I/O interface 150 may transmit an instruction or data, input from a user or another external device, to other component(s) of the electronic device 101. Furthermore, the I/O interface 150 may output an instruction or data, received from other component(s) of the electronic device 101, to a user or another external device.

The display 160 may include, for example, a liquid crystal display (LCD), a light-emitting diode (LED) display, an organic LED (OLED) display, or a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a portion of a user's body.

The communication interface 170 may establish communication between the electronic device 101 and an external electronic device (e.g., a first external electronic device 102, a second external electronic device 104, or a server 106). For example, the communication interface 170 may be connected to a network 162 or 164 through wireless communication or wired communication to communicate with the external device (e.g., a second external electronic device 104 or a server 106). The network 164 may correspond to a near field communication.

The wireless communication may include at least one of, for example, Llong term evolution (LTE), LTE advanced (LTE-A), code division multiple access (CDMA), wideband CDMA (WCDMA), (UTMS), wireless broadband (WiBro), global system for mobile communications (GSM), or the like, as a cellular communication protocol. The wired communication may include at least one of, for example, a universal serial bus (USB), a high definition multimedia interface (HDMI), a recommended standard132 (RS-132), or a plain old telephone service (POTS). The network 162 or 164 may include at least one of telecommunications networks, for example, a computer network (e.g., local area network (LAN) or wide area network (WAN)), an internet, or a telephone network.

Each of the first and second external electronic devices 102 and 104 may be a device of which the type is different from or the same as that of the electronic device 101. According to an embodiment of the present disclosure, the server 106 may include a group of one or more servers. According to an embodiment of the present disclosure, all or a part of the operations of the electronic device 101 may be executed by another or plural electronic devices (e.g., the electronic devices 102 and 104 and the server 106). According to an embodiment of the present disclosure, in the case where the electronic device 101 executes a function or service automatically or in response to a request, the electronic device 101 may not perform the function or the service internally, but, alternatively or additionally, may request at least a portion of a function associated with the electronic device 101 at another electronic device 102 or 104 or the server 106. The other electronic device 102 or 104 or the server 106 may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

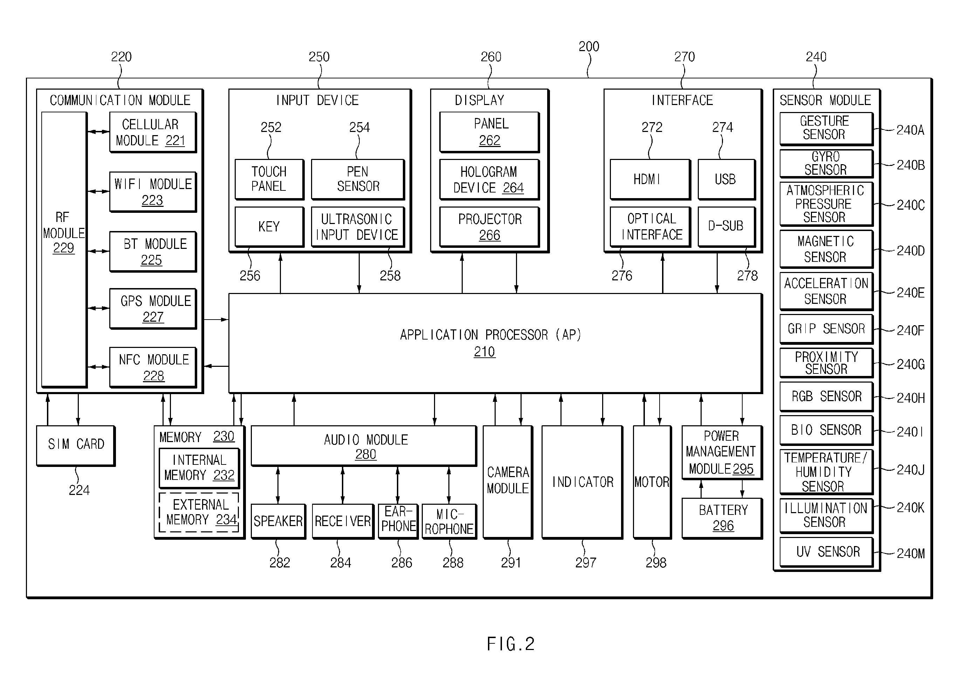

FIG. 2 is a block diagram of an electronic device 200 according to an embodiment of the present disclosure.

Referring to FIG. 2, the electronic device 200 may include all or a part of the electronic device 101 illustrated in FIG. 1. The electronic device 200 may include one or more application processors (AP) 210, a communication module 220, a subscriber identification module (SIM) card 224, a memory 230, a sensor module 240, an input device 250, a display 260, an interface 270, an audio module 280, a camera module 291, a power management module 295, a battery 296, an indicator 297, and a motor 298.

The AP 210 may drive, for example, an operating system (OS) or an application to control a plurality of hardware or software components connected to the AP 210 and may process and compute a variety of data including multimedia data. The AP 210 may be implemented with a system on chip (SoC), for example. According to an embodiment of the present disclosure, the AP 210 may further include a graphics processing unit (GPU) and/or an image signal processor. The communication module 220 may include a part (e.g., a cellular module 221) of components illustrated in FIG. 2. The AP 210 may load instructions or data, received from at least one of other components (e.g., a nonvolatile memory), onto a volatile memory and may store various data in a nonvolatile memory.

The communication module 220 may be configured to be the same as or similar to a communication interface 170 illustrated in FIG. 1. The communication module 220 may include a cellular module 221, a wireless-fidelity (Wi-Fi) module 223, a Bluetooth (BT) module 225, a global positioning system (GPS) module 227, a near field communication (NFC) module 228, and a radio frequency (RF) module 229.

The cellular module 221 may provide voice communication, video communication, a character service, an Internet service, and the like through a communication network. According to an embodiment of the present disclosure, the cellular module 221 may perform discrimination and authentication of the electronic device 201 within a communication network using a SIM card 224, for example. According to an embodiment of the present disclosure, the cellular module 221 may perform at least a portion of functions that the AP 210 provides. According to an embodiment of the present disclosure, the cellular module 221 may include a communication processor (CP).

Each of the Wi-Fi module 223, the BT module 225, the GPS module 227, and the NFC module 228 may include a processor for processing data exchanged through a corresponding module, for example. According to an embodiment of the present disclosure, at least a portion (e.g., two or more components) of the cellular module 221, the Wi-Fi module 223, the BT module 225, the GPS module 227, and the NFC module 228 may be included within one integrated circuit (IC) or an IC package.

The RF module 229 may transmit and receive data, for example, a communication signal (e.g., an RF signal). The RF module 229 may include a transceiver, a power amplifier module (PAM), a frequency filter, a low noise amplifier (LNA), an antenna, or the like. According to an embodiment of the present disclosure, at least one of the cellular module 221, the Wi-Fi module 223, the BT module 225, the GPS module 227, or the NFC module 228 may transmit and receive an RF signal through a separate RF module.

The SIM card 224 may include, for example, unique identification information (e.g., integrated circuit card identifier (ICCID)) or subscriber information (e.g., integrated mobile subscriber identity (IMSI)).

The memory 230 (e.g., a memory 130) may include an internal memory 232 or an external memory 234. For example, the internal memory 232 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 234 may include a flash drive, for example, a compact flash (CF) drive, a secure digital (SD) drive, a micro secure digital (Micro-SD) drive, a mini secure digital (Mini-SD) drive, an extreme digital (xD) drive or a memory stick. The external memory 234 may be functionally and/or physically connected to the electronic device 200 through various interfaces.

The sensor module 240 may measure a physical quantity or may detect an operation state of the electronic device 200. The sensor module 240 may convert measured or detected information to an electrical signal. Generally or additionally, the sensor module 240 may include at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., red, green, blue (RGB) sensor), a biological sensor 2401, a temperature/humidity sensor 240J, an illuminance sensor 240K, or an ultra violet (UV) light sensor 240M. Additionally or generally, the sensor module 240 may further include, for example, an electronic nose (E-nose) sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, a fingerprint sensor, and the like. The sensor module 240 may further include a control circuit for controlling at least one or more sensors included therein. According to an embodiment of the present disclosure, the electronic device may further include a processor which is a part of the AP 210 or independent of the AP 210 and is configured to control the sensor module 240. The processor may control the sensor module 240 when the AP 210 is in a low power state or sleep state.

The input device 250 may include a touch panel 252, a (digital) pen sensor 254, a key 256, or an ultrasonic input unit 258. The touch panel 252 may use at least one of capacitive, resistive, infrared and ultrasonic detecting methods. Also, the touch panel 252 may further include a control circuit. The touch panel 252 may further include a tactile layer. In this case, the touch panel 252 may provide a tactile reaction to a user.

The (digital) pen sensor 254 may be a part of a touch panel or may include a separate sheet for recognition. The key 256 may include, for example, a physical button, an optical key, a keypad, and the like. The ultrasonic input device 258, which is an input device for generating an ultrasonic signal, may enable the electronic device 200 to sense a sound wave through a microphone 288 so as to identify data.

The display 260 (e.g., a display 160) may include a panel 262, a hologram device 264, or a projector 266. The panel 262 may be configured to be the same as or similar to a display 160 illustrated in FIG. 1. The panel 262 may be, for example, flexible, transparent or wearable. The panel 262 and the touch panel 252 may be integrated into a single module. The hologram device 264 may display a stereoscopic image in a space using the light interference phenomenon. The projector 266 may project light onto a screen so as to display an image. The screen may be arranged internally to or externally of the electronic device 200. According to an embodiment of the present disclosure, the display 260 may further include a control circuit for controlling the panel 262, the hologram device 264, or the projector 266.

The interface 270 may include, for example, an HDMI 272, a USB 274, an optical interface 276, or a D-subminiature (D-sub) connector 278. The interface 270 may be included, for example, in a communication interface 170 illustrated in FIG. 1. Additionally or generally, the interface 270 may include, for example, a mobile high definition link (MHL) interface, an SD card/multi-media card (MMC) interface, or an Infrared Data Association (IrDA) standard interface.

The audio module 280 may convert a sound to an electrical signal and vice versa. At least a portion of the audio module 280 may be included, for example, in an input/output interface 150 illustrated in FIG. 1. The audio module 280 may process, for example, sound information that is input or output through a speaker 282, a receiver 284, an earphone 286, or a microphone 288.

The camera module 291 for taking a still image or a video may include, for example, at least one image sensor (e.g., a front sensor or a rear sensor), a lens, an image signal processor (ISP), or a flash (e.g., an LED or a xenon lamp).

The power management module 295 may manage, for example, power of the electronic device 200. According to an embodiment of the present disclosure, a power management integrated circuit (PMIC), a charger IC, or a battery gauge may be included in the power management module 295. The PMIC may use a wired charging method and/or a wireless charging method. The wireless charging method may include, for example, a magnetic resonance method, a magnetic induction method or an electromagnetic method, and may further include a coil loop, a resonant circuit, a rectifier, and the like. The battery gauge may measure, for example, a remaining capacity of the battery 296 and a voltage, current or temperature thereof while the battery is being charged. The battery 296 may include, for example, a rechargeable battery or a solar battery.

The indicator 297 may display a certain state of the electronic device 200 or a part thereof (e.g., the AP 210), such as a booting state, a message state, a charging state, and the like. The motor 298 may convert an electrical signal into a mechanical vibration and may generate a vibration or a haptic effect. A processing device (e.g., a GPU) for supporting a mobile TV may be included in the electronic device 200. The processing device for supporting a mobile TV may process media data according to the standards of digital multimedia broadcasting (DMB), digital video broadcasting (DVB) or media flow.

Each of the above-mentioned elements of the electronic device 200 according to an embodiment of the present disclosure may be configured with one or more components, and the names of the elements may be changed according to the type of the electronic device 200. The electronic device 200 according to an embodiment of the present disclosure may include at least one of the above-mentioned elements, and some elements may be omitted or other additional elements may be added. Furthermore, some of the elements of the electronic device 200 according to an embodiment of the present disclosure may be combined with each other so as to form one entity, so that the functions of the elements may be performed in the same manner as before the combination.

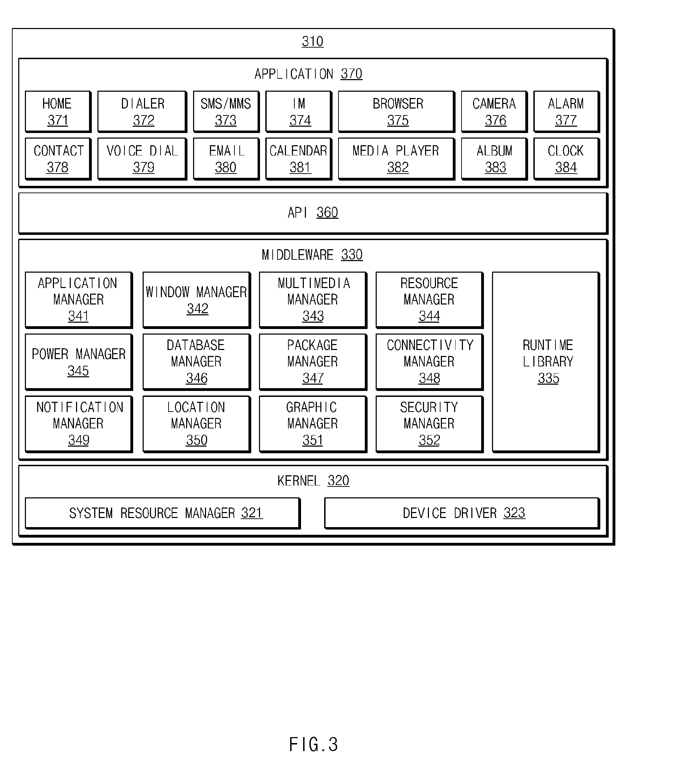

FIG. 3 is a block diagram of a program module 310, according to an embodiment of the present disclosure.

Referring to FIG. 3, according to an embodiment of the present disclosure, the program module 310 (e.g., a program 140) may include an OS to control resources associated with an electronic device 101, and/or diverse applications (e.g., an application program 147) driven on the OS. The OS may be, for example, Android, iOS, Windows®, Symbian, Tizen™, or Bada.

The program module 310 may include a kernel 320, a middleware 330, an application programming interface (API) 360, and/or an application 370. At least a part of the program module 310 may be preloaded on an electronic device or may be downloadable from a server (e.g., a server 106).

The kernel 320 (e.g., a kernel 141 of FIG. 1) may include, for example, a system resource manager 321 or a device driver 323. The system resource manager 321 may perform control, allocation, or retrieval of system resources. According to an embodiment of the present disclosure, the system resource manager 321 may include a process managing part, a memory managing part, or a file system managing part. The device driver 323 may include, for example, a display driver, a camera driver, a Bluetooth driver, a common memory driver, an USB driver, a keypad driver, a Wi-Fi driver, an audio driver, or an inter-process communication (IPC) driver.

The middleware 330 may provide, for example, a function which the application 370 needs in common, or may provide diverse functions to the application 370 through the API 360 to allow the application 370 to efficiently use limited system resources of the electronic device. According to an embodiment of the present disclosure, the middleware 330 (e.g., a middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include, for example, a library module which is used by a compiler to add a new function through a programming language while the application 370 is being executed. The runtime library 335 may perform input/output management, memory management, or capacities about arithmetic functions.

The application manager 341 may manage, for example, a life cycle of at least one application of the application 370. The window manager 342 may manage a graphical user interface (GUI) resource which is used in a screen. The multimedia manager 343 may identify a format necessary for playing diverse media files, and may perform encoding or decoding of media files by using a compression/decompression (codec) device and/or method suitable for the format. The resource manager 344 may manage resources such as a storage space, memory, or source code of at least one application of the application 370.

The power manager 345 may operate, for example, with a basic input/output system (BIOS) to manage a battery or power, and may provide power information for an operation of an electronic device. The database manager 346 may generate, search for, or modify a database which is to be used in at least one application of the application 370. The package manager 347 may install or update an application which is distributed in the form of a package file.

The connectivity manager 348 may manage, for example, a wireless connection such as Wi-Fi or Bluetooth. The notification manager 349 may display or notify of an event such as the arrival of a message, a promise, or a proximity notification in a mode that does not disturb a user. The location manager 350 may manage location information of an electronic device. The graphic manager 351 may manage a graphic effect that is provided to a user, or manage a user interface relevant thereto. The security manager 352 may provide a general security function necessary for system security or user authentication. According to an embodiment of the present disclosure, in the case where an electronic device 101 includes a telephony function, the middleware 330 may further includes a telephony manager for managing a voice or video call function of the electronic device.

The middleware 330 may include a middleware module that combines diverse functions of the above-described components. The middleware 330 may provide a module tailored to each type of OS to provide differentiated functions. Additionally, the middleware 330 may remove a part of the preexisting components, dynamically, or may add a new component thereto.

The API 360 (e.g., an API 145) may be, for example, a set of programming functions and may be provided with a configuration which is variable, depending on an OS. For example, in the case where an OS is the Android or the iOS, it may be permissible to provide one API set per platform. In the case where an OS is the Tizen™, it may be permissible to provide two or more API sets per platform.

The application 370 (e.g., an application program 147) may include, for example, one or more applications capable of providing functions for a home 371 function, a dialer 372, an SMS/MMS 373, an instant message (IM) 374, a browser 375, a camera 376, an alarm 377, a contact 378 function, a voice dial 379 function, an e-mail 380 function, a calendar 381 function, a media player 382, am album 383 function, and a clock 384, or for offering health care (e.g., measuring an exercise quantity or blood sugar level) or environmental information (e.g., atmospheric pressure, humidity, or temperature information).

According to an embodiment of the present disclosure, the application 370 may include an application (hereinafter an "information exchanging application") to support information exchange between the electronic device 101 and an external electronic device (e.g., an electronic device 102 or 104). The information exchanging application may include, for example, a notification relay application for transmitting certain information to the external electronic device, or a device management application for managing the external electronic device.

For example, the information exchanging application may include a function of transmitting notification information, which arise from other applications (e.g., applications for SMS/MMS, e-mail, health care, or environmental information), to an external electronic device 102 or 104. Additionally, the information exchanging application may receive, for example, notification information from an external electronic device and provide the notification information to a user. The device management application may manage (e.g., install, delete, or update), for example, at least one function (e.g., turn-on/turn-off of an external electronic device (or a part of components) or adjustment of brightness (or resolution) of a display) of the external electronic device 104 which communicates with the electronic device, an application running in the external electronic device, or a service (e.g., a call service or a message service) provided from the external electronic device.

According to an embodiment of the present disclosure, the application 370 may include an application (e.g., a health care application) which is assigned in accordance with an attribute (e.g., an attribute of a mobile medical device as a type of electronic device) of the external electronic device 102 or 104. According to an embodiment of the present disclosure, the application 370 may include an application which is received from an external electronic device (e.g., a server 106 or an electronic device 102 or 104). According to an embodiment of the present disclosure, the application 370 may include a preloaded application or a third party application which is downloadable from a server. The component titles of the program module 310 according to the embodiment of the present disclosure may be modifiable depending on types of OSs.

According to an embodiment of the present disclosure, at least a part of the program module 310 may be implemented in software, firmware, hardware, or a combination of at least two thereof. At least a part of the program module 310 may be implemented (e.g., executed), for example, by a processor (e.g., an AP 510). At least a part of the program module 310 may include, for example, a module, a routine, a set of instructions, or a process for performing one or more functions.

An electronic device may use a heat emission management system to reduce the influence due to emission of heat of the electronic device, for example, to reduce problems such as a decrease in performance of an electronic device due to an overload of a system, damage to a circuit, a burn or displeasure of a user, and the like. For example, the electronic device may include a sensor capable of measuring an internal temperature of the electronic device; if the internal temperature reaches a certain (e.g. pre-determined) level, the electronic device may control its performance level to lower the temperature.

A difference may exist between an internal temperature and a surface temperature of the electronic device. In the case of controlling the performance level of the electronic device based on only the internal temperature, it may be possible to prevent problems such as a decrease in performance of an electronic device due to an overload of a system, damage to a circuit, and the like. However, since a burn of a user may be due to a surface temperature of an electronic device, problems such as a burn or displeasure of the user and the like may differ from the problems such as a decrease in performance of an electronic device due to an overload of a system, damage to a circuit, and the like. For this reason, the probability that the problems such as a burn or displeasure of the user and the like are associated with the internal temperature of the electronic device may be low.

No problem may arise even though a temperature sensor is implemented at a surface of an electronic device. According to an embodiment of the present disclosure in which a temperature sensor is provided at a surface of an electronic device, it may be possible to predict a surface temperature of the electronic device from an internal temperature of the electronic device and to control the performance level of the electronic device using the predicted surface temperature.

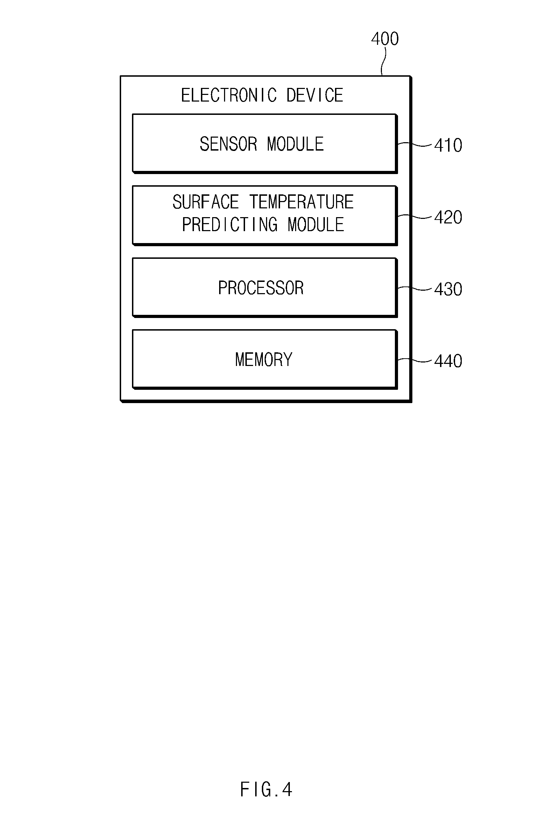

FIG. 4 is a block diagram of an electronic device 400 for limiting performance based on fluctuations in an internal temperature, according to an embodiment of the present disclosure.

Referring to FIG. 4, the electronic device 400 may include a sensor module 410, a surface temperature predicting module 420, a processor 430, and a memory 440. However, the electronic device 400 illustrated in FIG. 4 may be changed or modified according to components illustrated in FIG. 4. For example, the electronic device 400 may further include the following user interfaces for receiving an instruction or information from a user: a keyboard, a mouse, and the like.

The sensor module 410 may measure an internal temperature of the electronic device 400. The sensor module 410 may be configured at least the same as or similar to, for example, a sensor module 240 illustrated in FIG. 2. According to an embodiment of the present disclosure, the sensor module 410 may measure the internal temperature using a temperature management unit (TMU) included in a CPU, a GPU, or the like or a thermistor included in the electronic device 400 (e.g., placed close to an application processor (AP)).

The surface temperature predicting module 420 may predict a surface temperature of the electronic device 400 using at least one or more internal temperatures that the sensor module 410 measures. The surface temperature may be a temperature of a housing of the electronic device 400.

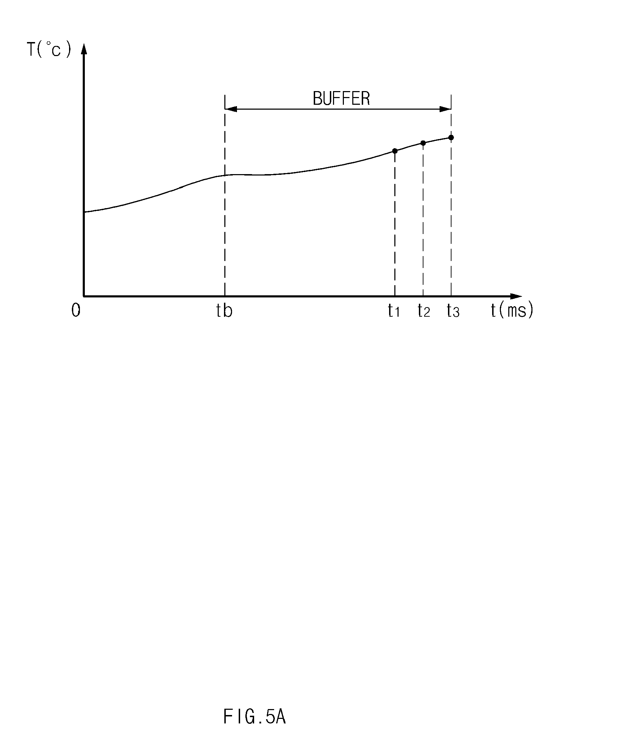

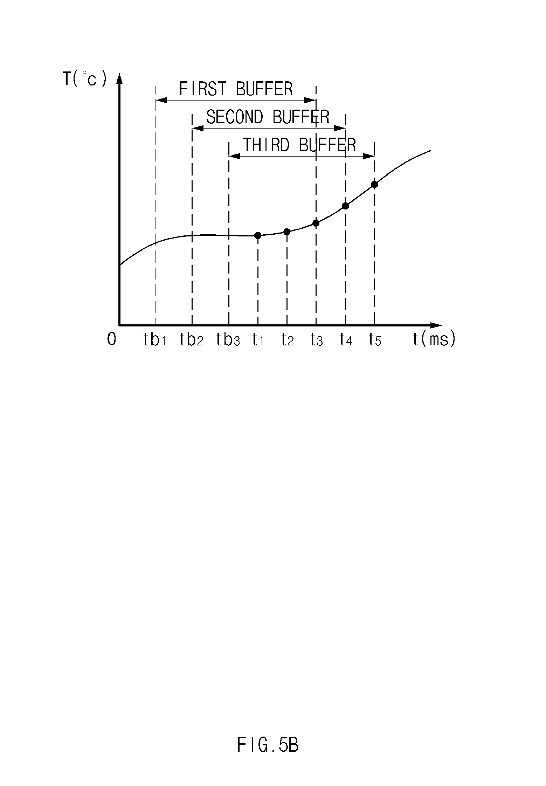

The surface temperature predicting module 420 may select at least some internal temperatures, which are used to predict the surface temperature, from among a plurality of internal temperatures measured by the sensor module 410. A set of the selected internal temperatures (or a window or a buffer) is described below with reference to FIGS. 5A and 5B. A reference of the selection may be the variation in the measured internal temperatures.

FIG. 5A is a graph illustrating a size of a buffer used to predict a surface temperature, according to an embodiment of the present disclosure.

Referring to FIG. 5A, the abscissa may represent a time, and the ordinate may represent a temperature. That is, the graph may indicate fluctuations in an internal temperature of an electronic device 400 over time.

A surface temperature predicting module 420 may designate a buffer including a set of internal temperatures. As described above, a reference for selecting the internal temperatures may be a variation in the internal temperatures.

It may be assumed that times t1 to t3 are successive. The surface temperature predicting module 420 may obtain a difference between an internal temperature at time t1 and an internal temperature at time t2 as a first variation. Likewise, the surface temperature predicting module 420 may obtain a difference between an internal temperature at time t2 and an internal temperature at time t3 as a second variation. According to an embodiment of the present disclosure, the surface temperature predicting module 420 may set a size of a buffer by determining a time t_{b} which is starting time point of the buffer. For example, at time t3, the surface temperature predicting module 420 may set the buffer of which the size ranges from t_{b} to t3, using the first variation and/or the second variation. The size of the buffer indicates a time range including multiple internal temperatures of each time point to be used for predicting a surface temperature of the electronic device 400. For example, the surface temperature predicting module 420 may set the size of the buffer using an absolute value of the second variation or may set the size of the buffer using a difference between the first variation and the second variation. Below, the surface temperature predicting module 420 is exemplarily described as setting the size of the buffer based on a variation on an internal temperature at a buffer setting point in time, for example, the second variation.

The surface temperature predicting module 420 may predict a mean (e.g., a weighted mean) of internal temperatures included in the buffer as a surface temperature of the electronic device 400.

According to an embodiment of the present disclosure, the size of the buffer at time t3 may be set differently according to an absolute value of the second variation or a difference between the first variation and the second variation. This embodiment is described below with reference to FIG. 5B.

FIG. 5B is a graph illustrating a change in size of a buffer used to predict a surface temperature, according to an embodiment of the present disclosure. In FIG. 5B, a description that would duplicate a description provided above with reference to FIG. 5A may be omitted.

Referring to FIG. 5B, a difference between an internal temperature at time t1 and an internal temperature at time t2, a difference between an internal temperature at time t2 and an internal temperature at time t3, a difference between an internal temperature at time t3 and an internal temperature at time t4, and a difference between an internal temperature at time t4 and an internal temperature at time t5 may be referred to as a first variation, a second variation, a third variation, and a fourth variation, respectively. Further, referring to FIG. 5B, the first buffer is from t_{b1} to t3, and the second buffer is from t_{b2} to t4, and the third buffer is from t_{b3} to t5.

A surface temperature predicting module 420 may set, at time t3, a first buffer of which the size ranges from t_{b1} to t3. The first buffer may also be set based on the value of the second variation.

When a time goes from t3 to t4, the surface temperature predicting module 420 may update the first buffer based on an internal temperature value at time t4. It may be understood from FIG. 5B that the third variation is greater than the first variation and the second variation. That is, it may be understood that fluctuations in an internal temperature at time t4 are greater than those at times t1, t2, and t3.

In the case where the third variation is greater than or equal to a certain value, the surface temperature predicting module 420 may perform updating in such a way that the size of the first buffer is reduced. Accordingly, the surface temperature predicting module 420 may set, at time t4, a second buffer of which the size ranges from t_{b2} to t4, and it may be understood that the size of the second buffer is less than that of the first buffer (an interval between times t_{b2} and t4 is shorter than an interval between times t_{b1} and t3). If the third variation is less than the certain value, the surface temperature predicting module 420 may set the size of the second buffer to be the same as that of the first buffer or may set the size of the second buffer to be greater than that of the first buffer.

Similarly, in the case where the fourth variation is greater than or equal to the certain value, the surface temperature predicting module 420 may perform updating in such a way that the size of the second buffer is reduced. Accordingly, the surface temperature predicting module 420 may set, at time t5, a third buffer of which the size ranges from t_{b3} to t5, and it may be understood that the size of the third buffer is less than that of the second buffer (an interval between times t_{b3} and t5 is shorter than an interval between t_{b2} and times t4).

According to an embodiment of the present disclosure, the surface temperature predicting module 420 may update a buffer size, based on a level of a variation (e.g. pre-determined value) in an internal temperature. For example, in the case where a variation in the internal temperature is less than a first level, the surface temperature predicting module 420 may increase the buffer size. In the case where a variation in the internal temperature is greater than or equal to the first level and less than a second level, the surface temperature predicting module 420 may not change the buffer size. Furthermore, in the case where a variation in the internal temperature is greater than or equal to the second level, the surface temperature predicting module 420 may decrease the buffer size. That is, the event that a variation (e.g. an absolute value thereof) in an internal temperature is small may indicate that the internal temperature is stable without a great fluctuation. According to an embodiment of the present disclosure, in this case, internal temperatures included in a buffer having a wide range may be used. In contrast, the event that a variation (e.g. an absolute value) of an internal temperature is great may indicate that the internal temperature is sharply varied. According to an embodiment of the present disclosure, in this case, internal temperatures included in a buffer having a narrow range may be predicted as surface temperatures.

If a variation in the internal temperature has a change greater than or equal to a third level, the surface temperature predicting module 420 may reset a buffer and may use only a corresponding internal temperature value as a surface temperature.

Returning to FIG. 4, a processor 430 may control performance level of the electronic device 400, based on a surface temperature that the surface temperature predicting module 420 predicts. For example, the operation may be performed if the predicted surface temperature reaches a certain (e.g. predetermined) temperature. An internal temperature of the electronic device 400 may be reduced by controlling the performance level of the electronic device 400, in particular by reducing the performance level, thereby making it possible to reduce a surface temperature to be predicted. According to an embodiment of the present disclosure, the processor 430 may include a configuration at least the same as or similar to a processor 120 illustrated in FIG. 1.

The processor 430 may adjust at least one of an operation clock of a CPU or a GPU, the number of operating cores, a level of a charging current of the electronic device, screen brightness of the electronic device, or a frame rate (e.g. the number of frames per second (FPS)). According to an embodiment of the present disclosure, the processor 430 may operate in light of an attribute of a running application, e.g. depending on the application currently running on the electronic device. For example, in the case where a game is being executed on an electronic device 400, the processor 430 may control an operating clock of the GPU or the number of operating cores. Furthermore, in the case where the electronic device 400 is being charged, the processor 430 may control a level of a charging current through a power management integrated circuit (PMIC).

According to an embodiment of the present disclosure, the processor 430 may obtain temperatures of parts in the electronic device 400 using at least one or more TMUs or thermistors and may select a to-be-controlled target using the obtained temperature values.

At least one or more of an operation clock of a CPU or a GPU, the number of operating cores, a level of a charging current of the electronic device, screen brightness of the electronic device, or a frame rate (e.g. FPS) may be controlled stage by stage (or step by step). For example, the operating clock of the CPU or GPU may be controlled such that the performance level of the electronic device 400 is varied in the following gradual manner: 100% → 90% → 80% → 70% and vice versa. In this case, how the performance level of the electronic device 400 is controlled may be determined based on a variation in the predicted surface temperature. For example, in the case where a variation in a surface temperature prediction value is less than a first level, the processor 430 may not change a step (e.g., 90%) with respect to the performance level of the electronic device 400; in the case where a variation in a surface temperature prediction value is greater than or equal to the first level, the processor 430 may lower the step such that the performance level of the electronic device 400 is changed from 90% to 80%. If a variation in the surface temperature prediction value is greater than or equal to a second level (e.g. greater than the first level), the processor 430 may lower the step significantly such that the performance level of the electronic device 400 is changed from 90% to 70%.

However, a lower limit for the performance level may be defined. For example, the operating clock of the CPU or GPU may be controlled by the processor 430 not to be lowered below the performance of "50%." According to an embodiment of the present disclosure, in the case where the predicted surface temperature is greater than or equal to a first limit temperature, the processor 430 may set the performance level of the electronic device 400 so as not to be lowered below the first level (e.g., 70%). That is, the processor 430 may control the performance level of the electronic device 400 step by step and may limit the performance level of the electronic device 400 based on the lower limit of each level of a surface temperature, thereby preventing the performance level of the electronic device 400 from being excessively lowered to such an extent such that a user cannot predict a surface temperature.

In the case where the predicted surface temperature reaches a target temperature, the processor 430 may restore, i.e. increase, the performance level of the electronic device 400 which was previously reduced. The processor 430 may stage by stage restore the performance level of the electronic device 400 based on a variation in the surface temperature.

The memory 440 may store data. The memory 440 may include, for example, a configuration at least the same as or equal to a memory 130 illustrated in FIG. 1. In this case, data stored at the memory 440 may include data exchanged between components in the electronic device 400 and data exchanged between the electronic device 400 and components external to the electronic device 400. For example, the memory 440 may store an internal temperature of the electronic device 400 measured by the sensor module 410 in connection with a measurement time. Furthermore, the memory 440 may store the lower limit needed to control the performance of parts included in the electronic device 400.

For example, the memory 440 may be a hard disk drive, a read only memory (ROM), a random access memory (RAM), a flash memory, a memory card, or the like external or internal to the electronic device 400.

It may be understood that the sensor module 410, the surface temperature predicting module 420, the processor 430, and the memory 440 are implemented independently of each other or two or more thereof are integrated.

According to an embodiment of the present disclosure, an electronic device may include a sensor module configured to measure an internal temperature of the electronic device, a surface temperature predicting module configured to predict a surface temperature of the electronic device using the internal temperature measured by the sensor module, and a processor configured to control the performance level of the electronic device based on the predicted surface temperature.

According to an embodiment of the present disclosure, the sensor module is further configured to measure the internal temperature of the electronic device at successive points in time.

According to a further embodiment of the present disclosure, the surface temperature predicting module is further configured to update the predicted surface temperature of the electronic device using at least the most recently measured internal temperature value.

According to an embodiment of the present disclosure, the surface temperature predicting module may determine the number of internal temperature measurement values to be used to predict the surface temperature, based on a variation in the internal temperature. In other words, the surface predicting module may determine how many measurement values of the internal temperature to use to predict the surface temperature on the basis of the variation in the internal temperature.

According to an embodiment of the present disclosure, the surface temperature predicting module may update the number of internal temperature measurement values to be used to predict the surface temperature, based on a variation between two successive internal temperature measurement values.
According to an embodiment of the present disclosure, the surface temperature predicting module may use the most recently measured surface temperature value if the variation in the internal temperature is greater than or equal to a certain value.

According to an embodiment of the present disclosure, the surface temperature predicting module may predict the surface temperature based on a weighted mean of the determined number of internal temperature measurement values.

According to an embodiment of the present disclosure, an operation in which the processor may control the performance level of the electronic device adjusts at least one of an operating clock of a CPU or a GPU, the number of operating cores, a level of a charging current of the electronic device, screen brightness of the electronic device, or a frame rate (e.g. frames per second (FPS)). In this case, the adjusting may be performed in light of an attribute of an application running on the processor, e.g. the adjusting may be performed depending on the currently running application.

According to an embodiment of the present disclosure, an operation in which the processor controls the performance level of the electronic device may be performed if the predicted surface temperature reaches a certain (e.g. pre-determined) temperature, and how the performance level of the electronic device is to be controlled may be determined based on a variation in the predicted surface temperature.

According to an embodiment of the present disclosure, the processor may control the performance level of the electronic device so as to be greater than or equal to at least a first level if the predicted surface temperature exceeds a first limit temperature and may control the performance level of the electronic device so as to be greater than or equal to at least a second level if the predicted surface temperature exceeds a second limit temperature. In this case, the second limit temperature may be greater than the first limit temperature and less than the first level.

According to an embodiment of the present disclosure, the processor may control the performance level of the electronic device stage by stage based on a variation in the predicted surface temperature.

According to an embodiment of the present disclosure, the processor may restore the performance level of the electronic device if the predicted surface temperature reaches a target temperature. For example, the performance level may be increased. In this case, an operation in which the processor restores the performance level of the electronic device may indicate restoring the performance level of the electronic device stage by stage based on a variation in the surface temperature.

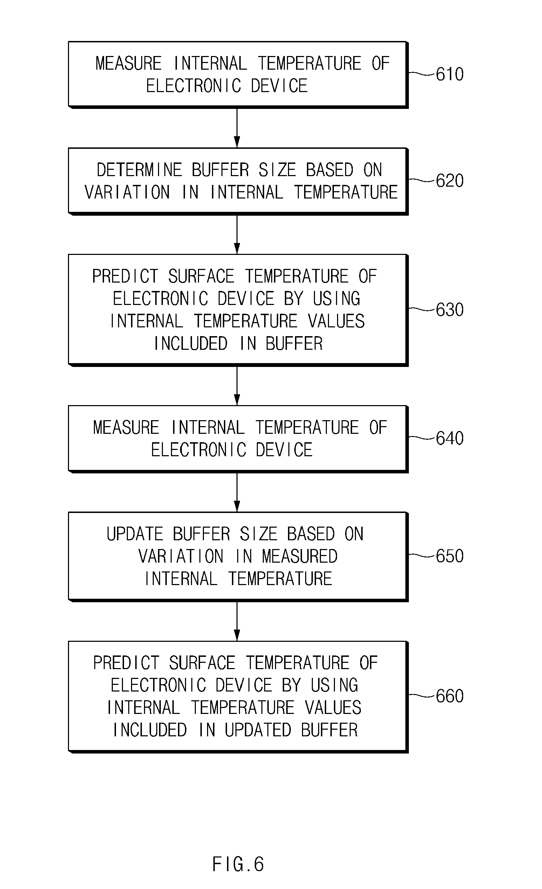

FIG. 6 is a flowchart of a method in which an electronic device 400 predicts a surface temperature, according to an embodiment of the present disclosure.

Referring to FIG. 6, a method in which an electronic device 400 predicts a surface temperature may include operations which are processed in a time sequential manner in the electronic device 400 according to an embodiment of the present disclosure illustrated in FIGS. 1 to 5. Accordingly, unless described below, a description provided above with regard to the electronic device of FIGS. 1 to 5 may be applied to a method in which an electronic device 400 according to an embodiment of the present disclosure illustrated in FIG. 6 predicts a surface temperature.

In operation 610, the electronic device 400 may measure an internal temperature of the electronic device 400.

In operation 620, the electronic device 400 may determine the size of a buffer based on the internal temperature measured in operation 610 and a proximately measured internal temperature (e.g. a variation in the internal temperature).

In operation 630, the electronic device 400 may predict a surface temperature of the electronic device 400 using values of internal temperatures included in the buffer of which the size is determined in operation 620.

In operation 640, the electronic device 400 may measure an internal temperature of the electronic device 400.

In operation 650, the electronic device may update the size of the buffer based on the internal temperature measured in operation 640 and the internal temperature measured in operation 610.

In operation 660, the electronic device 400 may predict a surface temperature of the electronic device 400 using values of internal temperatures included in the buffer of which the size is updated in operation 650 (e.g. a variation in the internal temperature).

The order of operations 610 to 660 described above with reference to FIG. 6 is not limited thereto. That is, the order of the above-described operations may be changed, and some operations thereof may be executed at the same time (e.g. in parallel). Furthermore, the above-described operations may be repeated periodically, that is, every certain time and may be executed based on a user input.

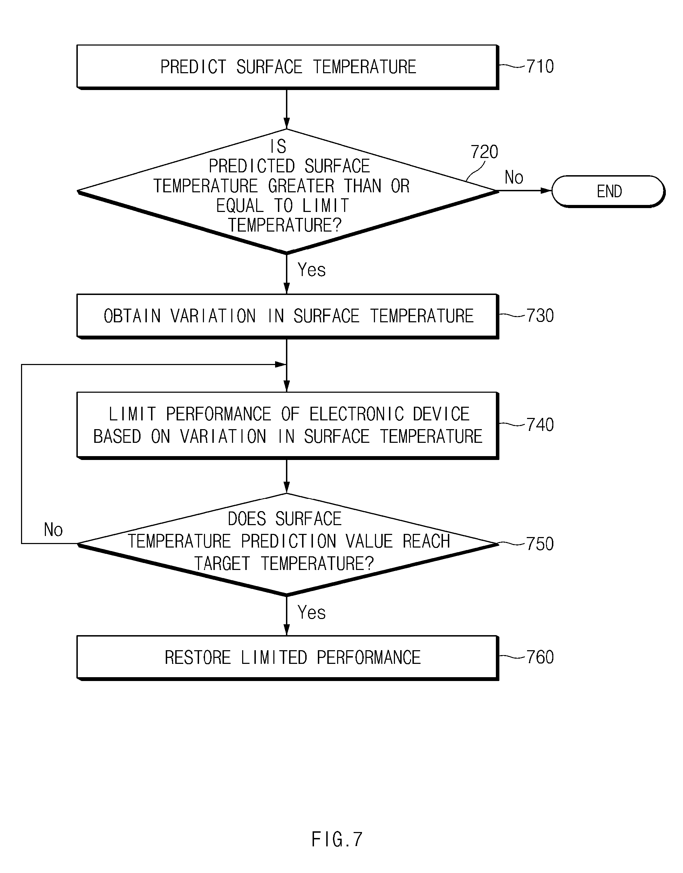

FIG. 7 is a flowchart of a method in which an electronic device 400 controls its performance using a surface temperature, according to an embodiment of the present disclosure.

Referring to FIG. 7, a method in which the electronic device 400 controls its performance using a surface temperature may include operations which are processed in a time sequential manner in the electronic device 400 according to an embodiment of the present disclosure illustrated in FIGS. 1 to 5. Accordingly, unless described below, a description provided above with regard to the electronic device of FIGS. 1 to 5 may be applied to a method in which an electronic device 400 according to an embodiment of the present disclosure illustrated in FIG. 7 predicts a surface temperature.

In operation 710, the electronic device 400 may predict a surface temperature thereof. The surface temperature may be predicted through the flowchart illustrated in FIG. 6.

In operation 720, the electronic device 400 may determine whether the surface temperature predicted in operation 710 is greater than or equal to a limit temperature. If the predicted surface temperature is less than the limit temperature, the method for controlling the performance of the electronic device 400 may be terminated.

According to an embodiment of the present disclosure, the limit temperature may include a first limit temperature and a second limit temperature (e.g. greater than the first limit temperature). The first and second limit temperatures may have lowest limits used to limit the performance level that are different from each other. For example, in the case where the surface temperature is greater than or equal to the first limit temperature and less than the second limit temperature, the performance level of the electronic device 400 may be limited so as not to be less than at least 70%. In the case where the surface temperature is greater than the second limit temperature, the performance level of the electronic device 400 may be limited so as not to be less than at least 50%.

In operation 730, in the case where the predicted surface temperature is greater than or equal to the limit temperature, the electronic device 400 may calculate a difference value (hereinafter a "surface temperature variation") between the predicted surface temperature and a proximately predicted surface temperature.

In operation 740, the electronic device 400 may limit the performance level of the electronic device 400, based on the surface temperature variation calculated in operation 730. According to an embodiment of the present disclosure, the performance level of the electronic device 400 may be limited stage by stage (or step by step), and the step may be determined differently according to a level of the surface temperature variation.

A surface temperature of the electronic device 400 may be lowered by limiting the performance of the electronic device 400 in operation 740. In operation 750, whether a most recently predicted surface temperature reaches a target temperature may be determined, i.e. whether the predicted surface temperature is equal to or less than the target temperature. If the most recently predicted surface temperature does not reach the target temperature, the electronic device 400 may predict a surface temperature periodically, which iterates until the most recently predicted surface temperature reaches the target temperature.

According to an embodiment of the present disclosure, if the most recently predicted surface temperature does not reach the target temperature, the performance of the electronic device 400 may be further limited based on the surface temperature variation. The reason may be that if the surface temperature variation is "0" or a positive number, the most recently predicted surface temperature never reaches the target temperature.

In operation 760, the electronic device 400 may restore the performance level limited in operation 740 if the most recently predicted surface temperature reaches the target temperature.

The order of operations 710 to 760 described above with reference to FIG. 7 may be exemplary and is not limited thereto. That is, the order of the above-described operations may be changed, and some operations thereof may be executed at the same time (e.g. in parallel). Furthermore, the above-described operations may be repeated periodically, that is, every certain time and may be executed based on a user input.

According to an embodiment of the present disclosure, a method for controlling performance of an electronic device may include measuring an internal temperature of the electronic device , predicting a surface temperature of the electronic device using the measured internal temperature, and controlling the performance level of the electronic device based on the predicted surface temperature.

According to an embodiment of the present disclosure, the method may further include determining the number of internal temperature measurement values to be used to predict the surface temperature, based on a variation of the internal temperature.

According to an embodiment of the present disclosure, controlling the performance level of the electronic device may be performed if the predicted surface temperature reaches a certain temperature, and how the performance level of the electronic device is to be controlled may be determined based on a variation of the predicted surface temperature.

According to an embodiment of the present disclosure, the controlling may include controlling the performance level of the electronic device so as to be greater than or equal to at least a first level if the predicted surface temperature exceeds a first limit temperature, and controlling the performance level of the electronic device so as to be greater than or equal to at least a second level if the predicted surface temperature exceeds a second limit temperature.

According to an embodiment of the present disclosure, the method may further include restoring the performance level of the electronic device if the predicted surface temperature reaches a target temperature.

According to an embodiment of the present disclosure, restoring the performance level of the electronic device may include restoring the performance level of the electronic device stage by stage based on a variation in the surface temperature.

The term "module" used herein may indicate, for example, a unit including one or more combinations of hardware, software and firmware. The term "module" may be used interchangeably with the terms "unit," "logic," "logical block," "component" and "circuit." The term "module" may indicate a minimum unit of an integrated component or may be a part thereof. The term "module" may indicate a minimum unit for performing one or more functions or a part thereof. The term "module" may indicate a component implemented mechanically or electronically. For example, the term "module" according to an embodiment of the present disclosure may include at least one of an application-specific IC (ASIC), a field-programmable gate array (FPGA), and a programmable-logic device (PLD) for performing some operations, which are known or will be developed.

According to an embodiment of the present disclosure, at least a portion of an apparatus (e.g., modules or functions thereof) or a method (e.g., operations) according to an embodiment of the present disclosure, for example, may be implemented by instructions stored in a non-transitory computer-readable storage medium in the form of a programmable module. The instruction, when executed by one or more processors (e.g., a first processor 120), may perform a function corresponding to the instruction. The non-transitory computer-readable storage medium, for example, may be the memory 130.

A non-transitory computer-readable recording medium may include a hard disk, a magnetic media such as a floppy disk and a magnetic tape, an optical media such as a Compact Disc Read Only Memory (CD-ROM) and a Digital Versatile Disc (DVD), a magneto-optical media such as an optical disk, and the following hardware devices configured to store and perform a program instruction (e.g., a programming module): ROM, RAM, and a flash memory. Also, a program instruction may include not only a mechanical code such as code generated by a compiler but also a high-level language code executable on a computer using an interpreter. The above hardware unit may be configured to operate via one or more software modules for performing an operation of the present disclosure, and vice versa.

A module or a programming module according to an embodiment of the present disclosure may include at least one of the above elements, a portion of the above elements may be omitted, or additional other elements may be further included. Operations performed by a module, a programming module, or other elements according to an embodiment of the present disclosure may be executed sequentially, in parallel, repeatedly, or in a heuristic method. Also, a portion of operations may be executed in different sequences, omitted, or other operations may be added.

According to an embodiment of the present disclosure, it may be possible to predict a surface temperature of an electronic device using a variation in an internal temperature and to control the performance of the electronic device based on the predicted surface temperature. Emission of heat may be managed by controlling the performance of the electronic device based on a surface temperature directly affecting a user, thereby improving user convenience.

While the present disclosure has been shown and described with reference to certain embodiments thereof, it will be understood by those skilled in the art that various changes in form and details may be made therein without departing from the scope of the present disclosure as defined by the appended claims and their equivalents.

## Claims

1. An electronic device, comprising:
a sensor module configured to measure an internal temperature of the electronic device;
a surface temperature predicting module configured to predict a surface temperature of the electronic device using the internal temperature measured by the sensor module; and
a processor configured to control a performance level of the electronic device based on the predicted surface temperature.

2. The electronic device of claim 1, wherein the sensor module is further configured to measure the internal temperature of the electronic device at successive points in time, and preferably
the surface temperature predicting module is further configured to update the predicted surface temperature of the electronic device using at least the most recently measured internal temperature value.

3. The electronic device of claim 2, wherein the surface temperature predicting module is further configured to determine the number of successive internal temperature measurement values to be used to predict the surface temperature, based on a variation in the internal temperature.

4. The electronic device of claim 3, wherein the surface temperature predicting module is further configured to update the number of successive internal temperature measurement values to be used to predict the surface temperature, based on a variation between two successive internal temperature measurement values.

5. The electronic device of claim 3 or 4, wherein the surface temperature predicting module is further configured to use only the most recently measured internal temperature value if the variation in the internal temperature is greater than or equal to a pre-determined value.

6. The electronic device of claim 3, 4 or 5, wherein the surface temperature predicting module is further configured to predict the surface temperature of the electronic device based on a weighted mean of the determined number of internal temperature measurement values.

7. The electronic device of any of the preceding claims, wherein the operation in which the processor is further configured to control the performance level of the electronic device by adjusting at least one or more of an operating clock of a central processing unit (CPU) or a graphics processing unit (GPU), a number of operating cores, a level of a charging current of the electronic device, screen brightness of the electronic device, or a frame rate.

8. The electronic device of any of the preceding claims, wherein the processor is further configured to control the performance level of the electronic device if the predicted surface temperature reaches a pre-determined temperature, and
wherein the performance level is set to a level determined based on a variation in the predicted surface temperature.

9. The electronic device of any of the preceding claims, wherein the processor is further configured to control the performance level of the electronic device to be greater than or equal to at least a first level if the predicted surface temperature exceeds a first limit temperature and control the performance level of the electronic device so as to be greater than or equal to at least a second level if the predicted surface temperature exceeds a second limit temperature.

10. The electronic device of claim 9, wherein the second limit temperature is greater than the first limit temperature and the second level is less than the first level.

11. The electronic device of claim 9 or 10, wherein the processor is further configured to control the performance level of the electronic device stage by stage based on a variation in the predicted surface temperature.

12. The electronic device of any preceding claim, wherein the processor is further configured to restore the performance level of the electronic device if the predicted surface temperature reaches a target temperature.

13. The electronic device of claim 12, wherein the processor is further configured to restore the performance level of the electronic device stage by stage based on a variation in the surface temperature.

14. A method of controlling a performance level of an electronic device, comprising:
measuring an internal temperature of the electronic device;
predicting a surface temperature of the electronic device using the measured internal temperature; and
controlling the performance level of the electronic device based on the predicted surface temperature.

15. A chipset for controlling a performance level of an electronic device, configured to:
measure an internal temperature of the electronic device;
predict a surface temperature of the electronic device using the measured internal temperature; and
control the performance level of the electronic device based on the predicted surface temperature.
